# FASCICULE DE BREVET EUROPEEN

(11) **EP 0 788 465 B1**
(45) Date de publication et mention de la délivrance du brevet: **15.12.1999**
(21) Numéro de dépôt: 95934183.5
(22) Date de dépôt: 06.10.1995
(51) Int. Cl.: C02F 1/72, C02F 1/02, C02F 11/18

(54) **PROCEDE ET INSTALLATION DE TRAITEMENT D'EFFLUENTS PAR OXYDATION EN PRESENCE D'UN CATALYSEUR HETEROGENE**
VERFAHREN UND ANLAGE FÜR DIE BEHANDLUNG VON ABWÄSSERN DURCH OXYDATION IN GEGENWART VON EINEM HETEROGENEN KATALYSATOR
METHOD AND APPARATUS FOR THE OXIDATION PROCESSING OF EFFLUENTS IN THE PRESENCE OF A HETEROGENEOUS CATALYST

(30) Priorité: 27.10.1994 FR 9413100
(43) Date de publication de la demande: 13.08.1997
(73) Titulaire: OTV Omnium de Traitements et de Valorisation, 94417 St Maurice Cédex (FR)
(72) Inventeur: DJAFER, Malik, F-92100 Boulogne-Billancourt (FR); LUCK, Francis, F-93160 Noisy-le-Grand (FR); SIBONY, Jacques, F-75018 Paris (FR)
(74) Mandataire: Vidon, Patrice
(86) Numéro de dépôt international: FR9501308
(87) Numéro de publication internationale: WO9613463

(56) Documents cités:
- EP-A- 0 196 597
- FR-A- 2 361 308
- FR-A- 2 444 008

## Description

Le domaine de l'invention est celui du traitement des effluents industriels ou urbains chargés en matières organiques et en composés azotés.

Plus généralement, l'invention s'applique au traitement des effluents qui contiennent des matières organiques ainsi que des composés organiques et inorganiques de l'azote, comme les lixiviats de décharge, les lisiers, les effluents de l'industrie chimique (colorants, explosifs, anilines, acide nicotinique, polyamides, etc.), les effluents de l'industrie agro-alimentaire, les boues d'épuration, les effluents issus du conditionnement et de la déshydratation des boues d'épuration, etc...

Le traitement dont il s'agit consiste à débarrasser les effluents à traiter d'une partie substantielle des composés indésirables qu'ils contiennent en vue de leur rejet dans un milieu naturel récepteur, une station d'épuration ou un réseau collecteur. L'effluent considéré peut être de l'eau ainsi que tout autre fluide liquide.

Les méthodes d'épuration utilisées pour traiter les effluents urbains ou industriels font classiquement intervenir des procédés biologiques visant à abattre leur demande biologique en oxygène (DBO) ainsi que leur teneur en nutriments azoté et en phosphore. Toutefois, certains effluents présentant des polluants difficilement biodégradables ainsi que des teneurs en ammoniaque élevées, requièrent l'utilisation de procédés spéciaux et/ou nécessitent de faire intervenir des substrats chimiques pour leur traitement.

Un des traitements performants adaptés à l'élimination de la demande chimique en oxygène (DCO) est l'oxydation en phase aqueuse, qui a été abondamment décrite dans l'art antérieur. Cette technique vise à réaliser une oxydation poussée de la matière organique peu biodégradable contenue dans des effluents aqueux, par contact desdits effluents avec un agent oxydant. Dans ce but, les conditions de mise en oeuvre d'un tel procédé sont typiquement comprises, pour la température, entre environ 20 et environ 350 °C et, pour la pression, entre environ 1 et environ 160 bar.

Les procédés d'oxydation en phase aqueuse ne permettent pas d'éliminer de façon substantielle l'azote ammoniacale, particulièrement lorsque les effluents à traiter contiennent des concentrations élevées d'azote ammoniacal (> 200 mg/l). Même l'oxydation en milieu humide (Wet Air Oxydation), qui est un des procédés d'oxydation les plus performants et qui est mené à une température généralement comprise entre environ 200 °C et environ 350 °C et à une pression généralement comprise entre environ 20 et environ 160 bars, ne permet d'éliminer l'azote ammoniacal qu'avec des rendements limités compris entre 5% et 10% alors que le carbone organique est détruit avec une efficacité proche de 80%. De nombreuses publications ont montré que le traitement des effluents industriels ou urbains par oxydation en milieu humide ne permettait qu'une élimination très partielle de l'azote total Kjeldahl, comprise entre 5 et 15%, et que celui-ci se trouvait en fin de traitement essentiellement sous forme d'azote ammoniacal.

Il existe également des procédés physiques d'élimination de l'azote ammoniacal. Le stripage à l'air ou à la vapeur, efficace pour les fortes teneurs, nécessite un investissement élevé et s'adapte mal au traitement d'effluents contenant également de fortes concentrations en matières organiques. De plus, il ne réalise qu'un transfert d'ammoniaque en le concentrant. Dans ce type de procédés l'ammoniaque est éliminé par neutralisation à l'acide sulfurique pour former du sulfate d'ammonium qui doit être stocké avant valorisation, ce qui constitue une charge d'exploitation supplémentaire. Dans le cadre d'un traitement par oxydation en milieu humide par exemple, cette opération ne peut se faire qu'après détente de l'effluent, refroidissement jusqu'à une température inférieure à 80 °C et ajustement du pH, de façon à éviter les émanations simultanées de composés organiques volatils, odorantes et/ou nuisibles, lors de l'aération forcée à température plus élevée. Ce traitement de l'azote ammoniacal subséquent à une oxydation en milieu humide entraîne de ce fait des coûts d'investissement et d'exploitation notablement plus élevés.

En station d'épuration l'élimination de l'azote ammoniacal peut aussi être effectuée par traitement de nitrification-dénitrification biologique. Ce traitement accepte difficilement des charges importantes.

Si l'effluent présente une DCO suffisamment élevée, il est possible de réaliser simultanément une élimination de la matière organique et des composés organiques et inorganiques de l'azote par incinération. Cette technique conduit cependant à la formation d'une quantité importante d'oxydes d'azotes NOx (x=1 et 2), par oxydation d'une fraction substantielle de la charge azotée. Le respect des normes d'émission de NOx impose de ce fait un traitement des fumées d'incinération, notamment par réduction catalytique des NOx par NH3, technique dont la mise en oeuvre est onéreuse.

Il est aussi possible de renforcer l'efficacité de l'oxydation en milieu humide vis-à-vis de l'élimination de l'azote ammoniacal par l'emploi de catalyseurs hétérogènes en contact avec l'effluent à traiter, composés par exemple de dioxyde de titane, d'un oxyde de terre rare et d'un métal précieux, comme décrit dans les brevets francais FR 2 444 008, FR 2 361 308, dans les brevets européens EP 196 597, EP-A- 431 932 ou encore dans le brevet américain US-A-3,988,259. Toutefois de tels catalyseurs présentent l'inconvénient de montrer une perte d'activité importante dans le temps due au fait qu'ils sont immergés lors de leur utilisation. Un autre inconvénient constitué par celle oxydation catalytique en milieu humide résulte du fait que le catalyseur hétérogène peut être affecté par précipitation dans sa structure de carbonates et de sulfates de calcium ainsi que de métaux présents à l'état de traces dans les effluents, comme le mercure, le cadmium, le plomb, le zinc, etc., et qui sont des poisons connus de nombreux catalyseurs en agissant par combinaison ou alliage, en particulier avec les métaux précieux. L'ensemble de ces inconvénients fait que ce procédé d'oxydation catalytique en milieu humide n'est pas actuellement utilisé pour traiter les effluents.

On notera par ailleurs que l'absence d'utilisation de catalyseurs dans le cadre par exemple d'un procédé d'oxydation en milieu humide se traduit par un entraînement d'ammoniac gazeux par les gaz de traitement, qui provoque la formation de dépôts de sels d'ammonium comme le sulfate d'ammonium, l'acétate d'ammonium, etc. Ces dépôts peuvent entraîner des bouchages d'organes essentiels comme des conduits et des vannes.

L'invention a pour objectif de fournir un procédé d'oxydation d'effluents en phase aqueuse permettant de pallier les inconvénients de l'état de la technique. Plus précisément, l'objectif de la présente invention est de fournir un procédé de traitement des effluents industriels ou urbains chargés en matières organiques ainsi qu'en composés organiques et inorganiques de l'azote, qui permette d'obtenir une élimination importante de l'azote ammoniacal et total ainsi que simultanément une diminution importante de la DCO desdits effluents et du rejet de gaz nocifs ou malodorants.

Un autre objectif de l'invention est de proposer un procédé et une installation permettant l'utilisation sans inconvénient des catalyseurs hétérogènes dans le cadre des procédés d'oxydation en phase aqueuse.

Encore un autre objectif de l'invention est de décrire un procédé permettant d'augmenter sensiblement la durée de vie de tels catalyseurs hétérogènes.

Encore un objectif de l'invention est d'améliorer l'efficacité des procédés d'oxydation en phase aqueuse et de diminuer le coût engendré par leur mise en oeuvre.

Ces objectifs, ainsi que d'autres qui apparaîtront par la suite, sont atteints grâce à l'invention qui concerne un procédé d'oxydation en phase aqueuse d'effluents consistant à faire subir auxdits effluents une oxydation menée à l'intérieur d'un réacteur dans lequel une phase gazeuse est ménagée au-dessus de la phase liquide constituée par les effluents, en présence d'au moins un catalyseur hétérogène disposé à l'intérieur dudit réacteur, et d'au moins un agent oxydant, à une température comprise entre 20°C et 350°C, sous une pression totale comprise entre 1 et 160 bars, de façon à minéraliser une partie de la matière organique et de l'azote ammoniacal et total contenu dans lesdits effluents, ladite oxydation étant
caractérisé en ce que ledit catalyseur est déposé au-dessus de l'interface entre ladite phase gazeuse et ladite phase liquide.

Un tel procédé permet de réaliser une élimination de l'azote total et ammoniacal par oxydation en azote moléculaire N₂ sans former d'oxydes d'note NOx (x = 1 ou 2).

Le catalyseur ainsi utilisé peut de plus réaliser simultanément l'élimination du monoxyde de carbone CO habituellement formé lors du traitement d'oxydation en milieu humide par oxydation en dioxyde du carbone et l'élimination des composés organiques volatils par oxydation en dioxyde de carbone et en eau.

On s'est en effet aperçu que, de façon surprenante, un tel positionnement du catalyseur à l'intérieur du réacteur permettait d'éliminer avec une grande efficacité à la fois l'cote ammoniacal et le CO, ce qui permet une décharge du gaz résiduaire à l'atmosphère sans traitement complexe ultérieur. De façon inattendue, le transfert de l'note ammoniacal vers la phase gazeuse du réacteur, jusqu'au catalyseur en vue de son oxydation, est suffisamment efficace pour qu'il n'y ait pas nécessité de procéder à un ajustement du pH à des valeurs élevées comme dans le cas de l'aération forcée.

La position du catalyseur hétérogène au-dessus de l'interface entre les phases gazeuse et liquide dans le réacteur d'oxydation permet de plus d'éviter l'emploi d'un catalyseur onéreux résistant aux conditions corrosives de la phase liquide, et d'autre part d'éliminer tout risque de bouchage du catalyseur par des particules et tout risque de perte d'activité du catalyseur par dissolution de sa phase active ou par réaction avec des contaminants présents dans la phase liquide.

Selon une variante intéressante de l'invention le procédé est mis en oeuvre à une température comprise entre environ 200 °C et 350 ° et sous une pression totale comprise entre environ 20 et environ 160 bar. Il constitue alors un procédé d'oxydation en milieu humide (WAO).

Préférentiellement, ledit catalyseur hétérogène est un métal appartenant au groupe comprenant le vanadium, le niobium, le chrome, le molybdène, le tungstène, le manganèse, le fer, le cobalt, le nickel, le cuivre, le cérium, le platine, le rhodium, le palladium, le ruthénium et l'iridium et les mélanges et composés d'un ou plusieurs d'entre eux.

Le catalyseur peut être avantageusement déposé sur un support minéral constitué par exemple d'un oxyde comme l'alumine, la silice, les zéolithes, le dioxyde de titane, la zircone, etc...

Les catalyseurs peuvent être préparés par tout autre moyen connu de l'homme de l'art, notamment par imprégnation d'un support poreux par une solution d'un ou plusieurs composés de métaux fournissant les métaux ou oxydes métalliques par activation thermique, ou par mélange du support oxyde et d'un ou plusieurs composés de métaux puis mise en forme par extrusion, pelletisation, granulation, pastillage, etc.

Le catalyseur de l'invention peut se présenter sous forme de sphères, de pastilles, d'extrudés cylindriques ou polylobés, d'anneaux, de nids d'abeille céramiques ou métalliques, ou tout autre forme adaptée à constituer un lit fixe de catalyseur disposé dans le réacteur de traitement d'oxydation en milieu humide, au-dessus de l'interface entre les phases gazeuse et liquide. Préférentiellement, on utilisera des nids d'abeille métalliques, ceux-ci présentant les avantages cumulés d'être peu coûteux, d'être faciles à mettre en oeuvre, de pouvoir être aisément positionnés par blocage dans les réacteurs et de pouvoir être facilement déplacés à l'intérieur de ceux-ci.

Comme précisé ci-dessus l'oxydation en phase aqueuse est effectuée dans un réacteur fonctionnant en continu ou en discontinu, à une température comprise entre environ 20 °C et environ 350°C, sous une pression totale comprise entre environ 1 bar et environ 160 bar. On utilise, pour effectuer ladite oxydation, au moins un agent oxydant choisi parmi l'air, l'air enrichi en oxygène, l'oxygène, l'ozone, le peroxyde d'hydrogène, les peracides, le chlore gazeux, le bioxyde de chlore, l'hypochlorite de sodium, le permanganate de potassium ou tout autre agent oxydant connu de l'homme de l'an.

Si l'agent oxydant utilisé est introduit dans le réacteur de traitement sous forme liquide ou en solution, comme par exemple le peroxyde d'hydrogène, l'hypochlorite de sodium, le permanganate de potassium, etc..., l'invention comprend préférentiellement un apport d'un flux gazeux dans le réacteur constitué d'au moins un agent choisi parmi l'air, l'air enrichi en oxygène, l'oxygène, l'ozone, la vapeur d'eau ou l'azote.

L'oxydation catalytique est quant à elle effectuée à une température comprise entre environ 200°C et environ 350°C préférentiellement entre 250°C et 300°C. Lors de la mise en oeuvre d'un procédé d'oxydation en milieu humide, le catalyseur ainsi placé à l'intérieur du réacteur présente ainsi, du fait de le température régnant dans ledit réacteur d'oxydation en milieu humide (entre 200°C et 350°C), une efficacité importante pour effectuer les réactions d'oxydation de NH₃ en N₂ et N₂O, de CO en CO₂ et des composés organiques volatils en CO₂ et H₂O, et ceci sans qu'un réchauffage des gaz soit nécessaire comme dans le cas du traitement desdits gaz dans un réacteur complémentaire situé en-dehors du réacteur d'oxydation en milieu humide. De plus, les différentes réactions d'oxydations ainsi catalysées étant fortement exothermiques, la chaleur émise par lesdites réactions est en grande partie transmise par rayonnement, conduction et convection à l'ensemble du réacteur, ce qui améliore son bilan thermique et permet notamment de traiter des effluents plus dilués, moins chargés en DCO, sans qu'il y ait nécessité d'apporter des calories pour équilibrer le bilan thermique global du procédé d'oxydation. Selon une variante intéressante de l'invention, cette température d'oxydation catalytique peut être supérieure à la température d'oxydation en phase aqueuse. Ainsi il sera possible de ne pas porter l'intégralité de l'intérieur du réacteur à la température d'oxydation catalytique mais seulement la zone dans laquelle s'effectue cette oxydation catalytique et ainsi d'employer des pressions moins importantes pour l'oxydation en phase aqueuse. Dans le cadre de la mise en oeuvre d'une telle variante de l'invention, on utilisera alors des moyens de chauffage spécifiques pour chauffer la zone d'oxydation catalytique, disposés au niveau de la zone du réacteur où est installé le catalyseur hétérogène. Ces moyens pourront notamment être constitués par un collier chauffant disposé à l'extérieur du réacteur. On pourra aussi provoquer un échauffement de la zone d'oxydation catalytique par effet Joule. Le fait de chauffer la zone d'oxydation catalytique à une température supérieure à celle de l'effluent liquide présente de plus l'avantage d'éviter toute condensation de cet effluent.

Selon une variante du procédé, ladite oxydation en phase aqueuse peut être effectuée en présence d'un catalyseur homogène destiné à augmenter l'efficacité d'abattement de la DCO. Selon une telle variante, l'oxydation est donc menée en présence de deux catalyseurs, un catalyseur hétérogène prévu au-dessus de l'interface entre la phase gazeuse et la phase liquide et un catalyseur homogène.

Préférentiellement, ledit catalyseur est un métal appartement au groupe comprenant le manganèse, le fer, le cobalt, le nickel, le cuivre, le zinc et les mélanges et composés d'un ou plusieurs d'entre eux. De façon particulièrement avantageuse, il s'agit d'un composé soluble du cuivre (tel que le sulfate de cuivre) ou du zinc ou leur mélange, le rapport massique métal catalyseur/demande chimique en oxygène (DCO) de l'effluent avant traitement étant préférentiellement compris entre 5.10⁻⁴ et 3.10⁻¹ environ.

On notera aussi que l'on pourra utiliser un autre catalyseur disposé à la sortie du réacteur, par exemple pour le traitement complémentaire de l'oxyde de carbone et des composés organiques volatils.

Dans le cas d'un réacteur fonctionnant en continu, il peut s'avérer avantageux de recycler au moins une partie de ladite phase gazeuse présente dans ledit réacteur d'oxydation en phase aqueuse, de manière à lui assurer un temps de contact suffisant pour obtenir une élimination substantielle de NH₃, du CO et des composés organiques volatils au moyen du catalyseur hétérogène placé dans ledit réacteur.

Selon une autre variante du procédé, l'effluent traité comprend une phase solide, et le procédé comprend une étape consistant à recycler au moins une partie de la phase solide présente dans le réacteur d'oxydation. Une telle étape permet d'assurer le temps de contact suffisant pour permettre l'oxydation de la partie organique de cette phase solide.

Egalement selon une variante avantageuse de l'invention, le procédé comprend une étape consistant à ajuster préalablement le pH desdits effluents à une valeur de 7 à 12. Il a en effet été constaté qu'un tel ajustement permettait d'accroître l'efficacité de l'oxydation catalytique de l'ammoniac sans augmenter la formation d'oxydes d'azote.

L'invention concerne également tout réacteur pour l'oxydation en phase aqueuse d'un effluent liquide par un agent oxydant caractérisé en ce qu'il comprend des moyens de maintien d'un catalyseur hétérogène au-dessus de la surface dudit effluent liquide.

Egalement préférentiellement, ledit réacteur inclut des moyens de réglage de la position desdits moyens de maintien, de façon à pouvoir régler la hauteur séparant le catalyseur de la surface de l'effluent liquide se trouvant dans le réacteur. Cette hauteur pourra varier en fonction de la nature de l'effluent traité et notamment en fonction de la présence ou non de moyens d'agitation dans le réacteur.

Selon une variante, le réacteur comprend un dévésiculeur entre la phase liquide et le catalyseur.

L'invention, ainsi que les différents avantages qu'elle présente seront plus facilement compris grâce à la description de cinq exemples de réalisation (exemple 2 à 6) qui va suivre, en référence à un exemple comparatif ne mettant pas en oeuvre les caractéristiques de l'invention (exemple 1) et en référence aux dessins dans lesquels:
- la figure 1 représente la formation et l'abattement de l'azote ammoniacal en fonction du temps de traitement, de la présence d'un catalyseur homogène (Cu) et d'un catalyseur hétérogène (catalyseur Pt), à 235 °C et 38 bar;
- la figure 2 représente l'abattement de la DCO en fonction du temps et de la présence d'un catalyseur homogène (cuivre) et d'un catalyseur hétérogène (platine);
- la figure 3 représente l'influence du pH final de l'effluent traité sur le taux d'élimination de l'azote ammoniacal;
- la figure 4 représente un premier mode de réalisation d'un réacteur conforme à la présente invention;

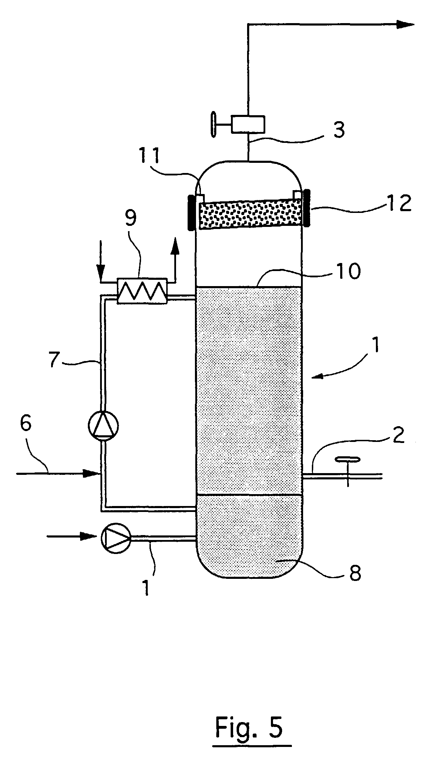

- la figure 5 représente un second mode de réalisation d'un réacteur conforme à la présente invention.

### Exemple 1 (non représentatif de l'invention)

Dans une première série d'essais, on étudie l'oxydation en milieu humide d'un effluent liquide présentant les caractéristiques suivantes :
DCO : 34,6 g/l
teneur en N-NH4 : 1,89 g/l
pH : 5,41

Cet effluent est placé dans un réacteur autoclave, en présence d'une stoechiométrie oxygène/DCO de 1,5, à une température de 235 °C et sous une pression totale de 46 bar, avec un temps de réaction de 10 mn. De façon comparative à un essai sans catalyseur hétérogène, on place dans l'autoclave des catalyseurs à base de métaux précieux sur support d'alumine en forme de pastilles cylindriques ( 2,8 mm x 3,5 mm), comportant respectivement 0,5 % de ruthénium (615 mg du catalyseur type 146 de Johnson Matthey), 0,5 % de platine (610 mg du catalyseur type 73 de Johnson Matthey) et 5 % de palladium (110 mg du catalyseur type 49 de Johnson Matthey).

Les valeurs suivantes de DCO et de N-NH4 sont relevées à la fin des essais:

| | Sans catalyseur | 0,5 % Ru | 0,5 % | Pt5 % Pd |
|---|---|---|---|---|
| DCO (g/l) | 31,9 | 31,0 | 28,0 | 30,3 |
| Abat. DCO (%) | 7,8 | 10,4 | 19,0 | 12,4 |
| N-NH4 (g/l) | 2,28 | 2,10 | 1,67 | 2,33 |
| Abat. N-NH4 (%) | -17,3 | -11,3 | -11,3 | -23,6 |

On constate que la présence des catalyseur à base de Ru et de Pd ne modifie pas de façon significative les abattements de la DCO et de l'azote ammoniacal. En revanche, le catalyseur à base de Pt conduit à un abattement de la DCO de 19 % ainsi qu'à l'élimination par oxydation de 11 % de l'azote ammoniacal. Cependant, après 10 mn de réaction, tous les catalyseurs utilisés ont perdu la plus grande partie de leur charge en métaux précieux sous forme de suspension dans la solution, à la suite de chocs et de frottements dus à l'agitation de l'effluent dans le réacteur, nécessaire à la réaction. Bien que présentant une certaine efficacité pour l'élimination de l'ammoniac, le catalyseur hétérogène à base de platine, placé dans l'effluent liquide à traiter,ne présente pas une durabilité suffisante pour une utilisation industrielle.

### Exemple 2

Dans une deuxième série d'essais, on étudie l'oxydation en milieu humide d'une boue de station d'épuration présentant les caractéristiques suivantes :
matières en suspension : 40,7 g/l
matières volatiles : 60, 7 %
DCO : 48,7 g/l
teneur en N-NH4 : 0,938 g/l
pH : 6,3

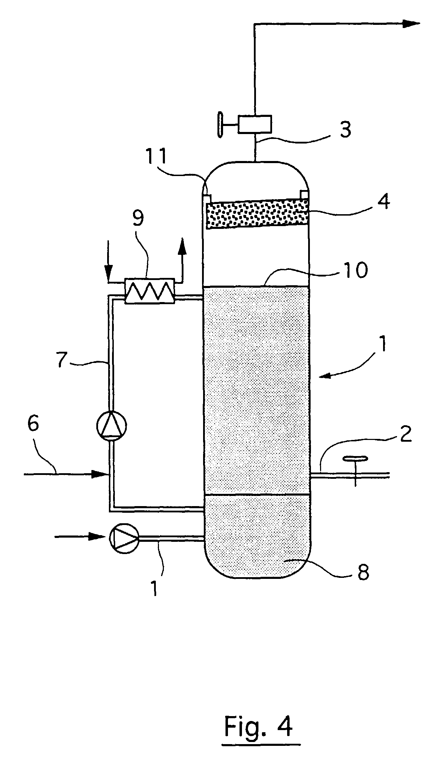

Cette boue est placée dans un réacteur d'oxydation en milieu humide conforme à la présente invention tel que représenté à la figure 4.

Le réacteur est alimenté en effluent à traiter par la canalisation d'injection 1. Ce réacteur est pourvu de moyens de chauffage permettant d'amener l'effluent à une température comprise entre environ 100°C et 350°C. Des moyens de pressurisation sont prévus pour amener les effluents à traiter présents dans le réacteur sous une pression comprise entre environ 5 bar et environ 160 bar.

De façon classique, le réacteur est muni de deux canalisations 2 et 3 :
- d'une part une canalisation 3 d'évacuation d'une phase gazeuse saturée en eau, contenant essentiellement de l'oxygène,
- d'autre part une canalisation 2 d'évacuation d'une phase essentiellement liquide contenant principalement de la matière organique résiduelle soluble ainsi qu'une phase solide essentiellement minérale en suspension.

L'injection d'oxygène 6 s'effectue par une boucle 7 de recirculation des boues depuis la base 8 du réacteur 1 vers sa partie supérieure. Cette disposition est avantageuse mais non obligatoire. On peut envisager d'injecter l'oxygène en un autre endroit du réacteur. Un échangeur de chaleur 9 est prévu pour récupérer les calories des effluents traités et les restituer par exemple pour préchauffer l'effluent à traiter.

Conformément à la caractéristique essentielle de l'invention, un catalyseur hétérogène est placé dans un panier 4 au dessus de l'interface 10 entre la phase liquide et la phase gazeuse présentes dans le réacteur de façon à ménager entre ledit interface 10 et ledit catalyseur un volume de garde permettant d'empêcher ou, à tout le moins de minimiser, le contact dudit effluent avec ledit catalyseur. Ce volume de garde est obtenu en maintenant une pression partielle suffisante au-dessus du liquide tout en gardant celui-ci à un niveau donné. Des moyens 11, constitués par des ergots sur la paroi intérieure du réacteur sont prévus pour faire varier la position dudit panier.

Dans le cadre du présent exemple les boues sont placées dans ce réacteur en présence d'une stoechiométrie oxygène/DC0 de 1,5, à une température de 235 °C et sous une pression totale de 38 bar. De façon comparative aux essais sans catalyseur hétérogène, on place dans l'autoclave un catalyseur hétérogène, conformément à la présente invention. Le catalyseur utilisé est un catalyseur à base de 0,5 % de platine sur support d'alumine en forme de pastilles cylindriques (2,8 mm x 3,5 mm, catalyseur type 73 de Johnson Matthey), contenu dans un panier grillagé placé horizontalement à environ 30 cm au-dessus de l'interface liquide-gaz au repos (sans agitation).

Certains essais sont réalisés en ajoutant dans la boue à traiter un catalyseur homogène (sulfate de cuivre, à raison d'une teneur en cuivre de 500 mg/l), catalyseur destiné à accélérer l'abattement de la DCO.

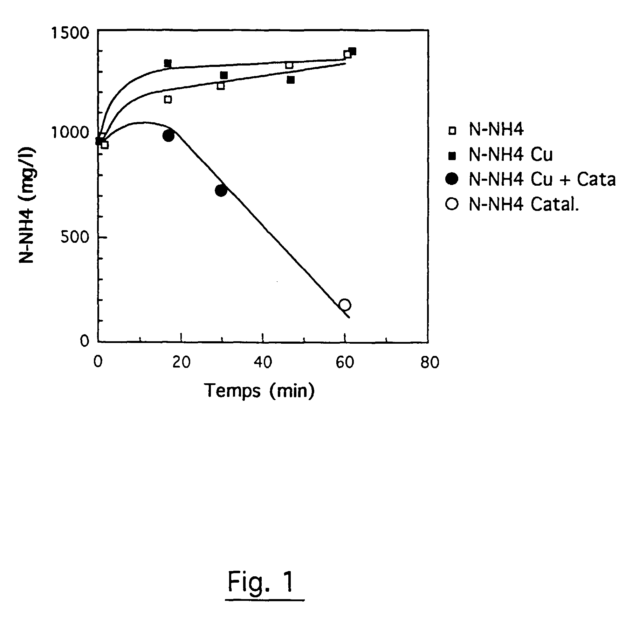

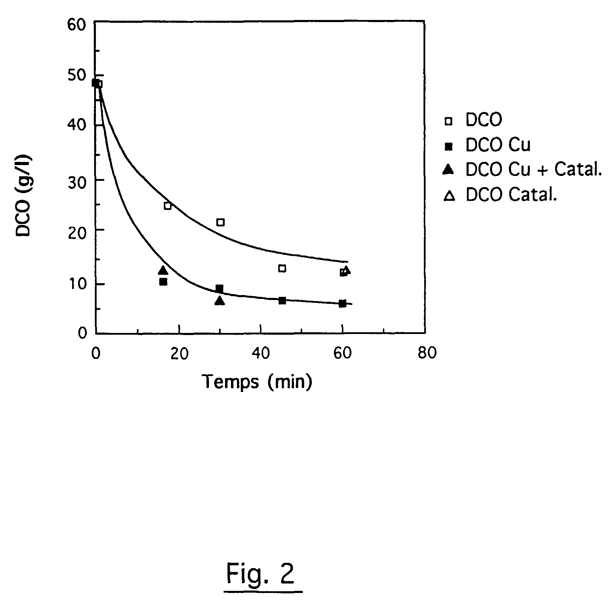

Les résultats présentés à la figure 1 montrent que le catalyseur homogène cuivre utilisé seul (sans catalyseur hétérogène à base de platine) ne fait qu'accélérer la cinétique de transformation de l'azote organique (acides aminés, peptides, protéines,...) en azote ammoniacal, mais ne contribue pas à éliminer l'azote ammoniacal par oxydation par rapport à un essai sans cuivre. Les 3 essais réalisés en présence du catalyseur platine montrent au contraire un important abattement de l'azote ammoniacal, jusqu'à 86 % après 1 heure de temps de réaction.
On constate, d'après les résultats représentés à la figure 2, que la présence du catalyseur platine n'affecte d'aucune manière l'élimination de la DCO lors de la réaction d'oxydation en milieu humide. Contrairement à l'art antérieur, et notamment aux descriptions du brevet EP - 431 932, d'après lesquelles la présence d'un catalyseur hétérogène, par exemple à base de platine en contact avec l'effluent augmente le taux d'élimination de la DCO et de l'azote ammoniacal, la mise en oeuvre du catalyseur hétérogène selon l'invention autorise une élimination poussée de l'azote sans aucunement affecter celle de la DCO.

Il devient donc possible, par exemple dans le cadre d'une station d'épuration des eaux résiduaires, d'éliminer au moyen d'un traitement par oxydation en milieu humide des boues l'azote ammoniacal et total, en produisant un effluent essentiellement constitué d'acides gras volatils, d'alcools et de cétones, cet effluent constituant une source carbonée très efficace pour effectuer l'élimination de l'azote contenu dans l'effluent entrant dans la station par dénitrification biologique.

### Exemple 3

Dans une troisième série d'essais, on étudie l'oxydation en milieu humide d'une boue de station d'épuration présentant les caractéristiques suivantes :
matières en suspension : 40,7 g/l
matières volatiles : 60, 7 %
DCO : 48,7 g/l
teneur en N-NH4 : 0,938 g/l
pH : 6,3

Cette boue est placée dans le réacteur décrit à la figure 4, en présence d'une stoechiométrie oxygène/DCO de 1,5, à une température de 235 °C et sous une pression totale de 38 bar, avec un temps de réaction de 15 mn. De façon comparative aux essais sans catalyseur hétérogène, on place dans l'autoclave la même charge de catalyseur à base de 0,5 % de platine déjà utilisée pour la deuxième série d'essais, contenue dans un panier grillagé placé soit horizontalement à environ 30 cm au-dessus de l'interface liquide-gaz au repos (essais H3), soit verticalement à environ 80 cm au-dessus de l'interface liquide-gaz au repos (essais V8). Certains essais sont réalisés en ajoutant dans la boue à traiter un catalyseur homogène (sulfate de cuivre, à raison dune teneur en cuivre de 500 mg/l), catalyseur destiné à accélérer l'abattement de la DCO. Optionnellement, le pH initial de la boue (6,3) est ajusté à une valeur de 10 par ajout d'une solution de soude.

Les résultats du Tableau 1 montrent que l'augmentation du pH initial de la boue permet d'accroître l'efficacité de l'oxydation catalytique de l'ammoniac, et qu'il n'y a pas formation significative d'oxydes d'azote NOx, qui se solubiliseraient sous forme d'ions nitrite NO₂- et nitrate NO₃- dans I'effluent traité.

**Tableau 1**

| Catalyseurs | pH initial | pH final | | Temps de contact (min) | N-NH4 (mg/l) | N-NO2N-NO3 | |
|---|---|---|---|---|---|---|---|
| | | | | | | (mg/l) | (mg/l) |
| - | 6,3 | 7,6 | 60 | 0 | 1407 | 12 | n.d. |
| Pt (H3) | 6,3 | 4,5 | 60 | 15 | 189 | 15 | 0,2 |
| Pt (H3) | 6,3 | 5,8 | 60 | 15 | 126 | 25 | 0,7 |
| Cu | 6,3 | 6,5 | 15 | 15 | 1361 | 4,5 | n.d. |
| Cu, Pt (V8) | 6,3 | 6,1 | 15 | 15 | 867 | 9 | 0,4 |
| Cu, Pt (V8) | 10,0 | 6,8 | 15 | 15 | 696 | 8 | 0,3 |
| n.d. : non déterminé | | | | | | | |

### Exemple 4

Dans une quatrième série d'essais, on étudie l'oxydation en milieu humide d'un effluent liquide issu d'un procédé de conditionnement thermique des boues, et présentant les caractéristiques suivantes :
DCO : 9,4 g/l
teneur en N-NH4 : 1,52 g/l
pH : 7,85

Cet effluent est placé dans un réacteur autoclave, en présence d'une stoechiométrie oxygène/DCO de 1,5, à une température de 235 °C et sous une pression totale de 35 bar, avec un temps de réaction de 15 mn. De façon comparative à un essai sans catalyseur hétérogène, on place dans l'autoclave la même charge de catalyseur à base de 0,5 % de platine déjà utilisée pour les deuxième et troisième séries d'essais, verticalement à environ 80 cm au-dessus de l'interface liquide-gaz au repos.

**Tableau 2**

| Catalyseurs | pH initial | pH final | Temps de contact (min) | N-NH4 (mg/l) | N-NO2N-NO3 | |
|---|---|---|---|---|---|---|
| | | | | | (mg/l) | (mg/l) |
| - | 7,85 | 7,85 | 0 | 1521 | 323 | |
| Cu, Pt (H3) | 7,85 | 6,7 | 15 | 720 | 117 | |
| Cu, Pt (H3) | 10,0 | 7,6 | 15 | 600 | 116 | |

Les résultats présentés dans le Tableau 2 confirment que l'augmentation du pH initial de l'effluent de 7,85 à 10,0 permet d'accroître l'efficacité de l'oxydation catalytique de l'ammoniac, et qu'il n'y a pas d'augmentation significative du total des formes oxydées de l'azote, nitrite NO₂- et nitrate NO₃-, dans l'effluent traité. Exemple 5

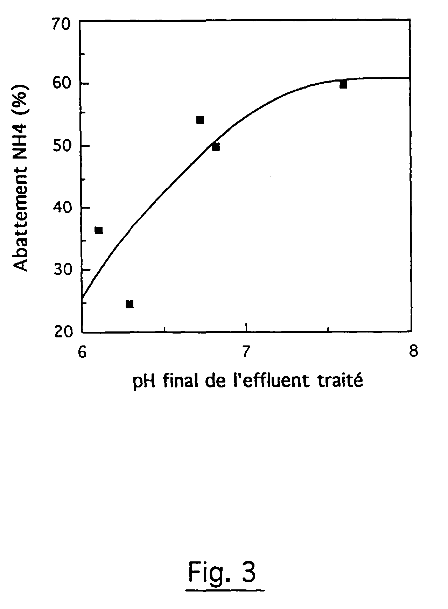

La Figure 3 montre l'effet du pH final des effluents traités sur le taux d'élimination de l'azote ammoniacal, dans différents essais réalisés en présence d'une stoechiométrie oxygène/DCO de 1,5, à une température de 235 °C pendant 15 minutes, sous une pression totale de 38 bar, en présence d'un catalyseur homogène (sulfate de cuivre, à raison d'une teneur en cuivre de 500 mg/l) et d'une charge de catalyseur à base de 0,5 % de platine, contenue dans un panier grillagé placé soit horizontalement à environ 30 cm au-dessus de l'interface liquide-gaz au repos (essais H3), soit verticalement à environ 80 cm au-dessus de l'interface liquide-gaz au repos (essais V8). Optionnellement, le pH initial de l'effluent est ajusté à une valeur de 10 par ajout d'une solution de soude.

Ces résultats confirment que l'élimination de l'azote ammoniacal est favorisée par une augmentation du pH de l'effluent.

### Exemple 6

Dans cet essai, on étudie l'oxydation en milieu humide d'un effluent contenant les composés suivants:
- Urée (NH₂CONH₂ : 0,026 mol/l
- Hexaméthylènetétramine ou HTM (C₆H₁₂N₄) : 0,036 mol/l
- DCO : 7,6 g/l

Cet effluent est placé dans un réacteur, en présence d'une stoechiométrie oxygène DCO de 1,5, à une température de 285°C et sous une pression totale de 86 bar, avec un temps de réaction de 10 mn. De façon comparative à un essai sans catalyseur hétérogène, on place dans l'autoclave un catalyseur à base de métaux précieux sur support d'alumine en forme de nid d'abeille cylindrique comportant 0,5 % de platine.

**Tableau 3**

| | solution initiale | traitement sans catalyseur | traitement avec catalyseur |
|---|---|---|---|
| DCO g/l | 7,6 | 0,4 | 0,03 |
| N-NO3 g/l | -- | 0,008 | 0,075 |
| N-NO2 g/l | -- | 0 | 0,04 |
| N-NH4 g/l | -- | 2,76 | 0,045 |
| PH | 7,5 | 9 | 6 |

Les résultats que l'on obtient (voir tableau 3) montrent que la présence du catalyseur permet une élimination de l'ammoniaque avec un rendement de 98 % et qu'il n'y a pas d'augmentation significative du total des formes oxydées de l'azote, nitrite NO₂- et nitrate NO₃-, dans l'effluent traité.

### Exemple 7

Dans cet essai, on étudie l'oxydation en milieu humide d'un effluent contenant les composés suivants :
- Urée (NH₂CONH₂ : 0,0335 mol/l
- Amino-4-benzènesulfonamide (C₆H₈N₂O₂S) : 0,0697 mol/l
- DCO : 11,4 g/l
- pH : 6,8

Cet effluent est placé dans un réacteur autoclave, en présence d'une stoechiométrie oxygène/DCO de 1,5, à une température de 285°C et sous une pression totale de 86 bar, avec un temps de réaction de 10 mn. De façon comparative à un essai sans catalyseur hétérogène, on place dans l'autoclave un catalyseur à base de métaux précieux sur support d'alumine en forme de nid d'abeille cylindriques comportant 0,5 % de platine.

**Tableau 4**

| | solution initiale | traitement sans catalyseur | traitement avec catalyseur |
|---|---|---|---|
| DCO g/l | 11,4 | 0,5 | 0,24 |
| N-NO3 g/l | -- | 0,002 | 0,010 |
| N-NO2 g/l | -- | 0 | 0,010 |
| N-NH4 g/l | -- | 1,8 | 0,34 |
| PH | 6,8 | 8,3 | 2,1 |

Les résultats que l'on obtient (voir tableau 4) montrent que la présence du catalyseur permet une élimination de l'ammoniaque avec un rendement de 81 % et qu'il n'y a pas d'augmentation significative du total des formes oxydées de l'azote, nitrite NO₂- et nitrate NO₃-, dans l'effluent traité.

L'ensemble des résultats décrits ci-dessus fait apparaître clairement les nombreux avantages liés à la mise en oeuvre d'un traitement d'effluents selon le procédé de l'invention, dans un réacteur au sein duquel ont fait subir auxdits effluents une oxydation en milieu humide en présence d'un catalyseur hétérogène et optionnellement d'un catalyseur homogène, et d'au moins un gaz oxydant comme l'air ou l'oxygène, à une température comprise entre environ 20°C et environ 350°C, sous une pression totale comprise entre environ 1 et environ 160 bars. Cette description n'est toutefois nullement limitative de l'invention en ce qui concerne le type d'effluent, la formulation et les conditions de mise en oeuvre des catalyseurs, ni les conditions de mise en oeuvre du procédé représentatif de l'invention. On notera enfin que le procédé décrit dans le présente demande de brevet est compatible avec le procédé d'oxydation en milieu humide avec recyclage interne des résidus solides décrit dans la demande de brevet française n° 9403503 déposée le 21 mars 1994 par la Demanderesse.

## Revendications

1. Procédé d'oxydation en phase aqueuse d'effluents consistant à faire subir auxdits effluents une oxydation menée à l'intérieur d'un réacteur dans lequel une phase gazeuse est ménagée au-dessus de la phase liquide constituée par les effluents, en présence d'au moins un catalyseur hétérogène disposé à l'intérieur dudit réacteur, et d'au moins un agent oxydant, à une température comprise entre 20°C et 350°C, sous une pression totale comprise entre 1 et 160 bars, de façon à minéraliser une partie de la matière organique et de l'azote ammoniacal et total contenu dans lesdits effluents, ladite oxydation étant
caractérisé en ce que ledit catalyseur est déposé au-dessus de l'interface entre ladite phase gazeuse et ladite phase liquide.

2. Procédé selon la revendication 1 caractérisé en ce qu'il est effectué à une température comprise entre 200 °C et 350 °C, sous une pression totale comprise entre 20 et 160bars.

3. Procédé selon la revendication 1 ou 2 caractérisé en ce que ledit catalyseur hétérogène est un métal appartenant au groupe comprenant le vanadium, le niobium, le chrome, le molybdène, le tungstène, le manganèse, le fer, le cobalt, le nickel, le cuivre, le cérium, le platine, le rhodium, le ruthénium, le palladium et l'iridium et les mélanges et composés d'un ou plusieurs d'entre eux.

4. Procédé selon l'une des revendications 1 à 3 caractérisé en ce que ledit catalyseur est déposé sur un support minéral.

5. Procédé selon la revendication 4 caractérisé en ce que ledit support minéral est choisi dans le groupe constitué par l'alumine, la silice, les zéolithes, le dioxyde de titane, la zircone.

6. Procédé selon l'une des revendications 1 à 3 caractérisé en ce que ledit catalyseur se présente sous la forme d'un nid d'abeille métallique.

7. Procédé selon l'une des revendications 1 à 6 caractérisé en ce que l'agent oxydant utilisé pour ladite oxydation est choisi parmi l'air, l'air enrichi en oxygène, l'oxygène, l'ozone, le peroxyde d'hydrogène, les peracides, le chlore gazeux, le bioxyde de chlore, l'hypochlorite de sodium, le permanganate de potassium.

8. Procédé selon l'une des revendications 1 à 7 caractérisé en ce que l'oxydation est réalisée en présence d'un flux gazeux dans le réacteur constitué d'au moins un gaz choisi parmi l'air, l'air enrichi en oxygène, l'oxygène, l'ozone, la vapeur d'eau ou l'azote.

9. Procédé selon l'une des revendications 1 à 8 caractérisé en ce que ladite oxydation en phase aqueuse est effectuée également en présence d'un catalyseur homogène destiné à augmenter l'efficacité d'abattement de la DCO.

10. Procédé selon la revendication 9 caractérisé en ce que ledit catalyseur homogène est un métal appartement au groupe comprenant le manganèse, le fer, le cobalt, le nickel, le cuivre, le zinc et les mélanges et composés d'un ou plusieurs d'entre eux.

11. Procédé selon la revendication 10 caractérisé en ce que ledit catalyseur est un composé soluble du cuivre ou du zinc ou leur mélange.

12. Procédé selon la revendication 11 caractérisé en ce que ledit composé soluble de cuivre est du sulfate de cuivre.

13. Procédé selon l'une des revendications 10 à 12 caractérisé en ce que le rapport massique métal catalyseur/demande chimique en oxygène (DCO) de l'effluent avant traitement est compris entre 5.10⁻⁴ et 3.10⁻¹.

14. Procédé selon l'une des revendications 1 à 13 caractérisé en ce qu'il comprend une étape consistant à recycler au moins une partie de ladite phase gazeuse présente dans ledit réacteur d'oxydation, de manière a lui assurer un temps de contact suffisant pour obtenir une élimination substantielle de NH₃, du CO et des composés organiques volatils au moyen dudit catalyseur hétérogène placé dans ledit réacteur.

15. Procédé selon l'une des revendications 1 à 14 caractérisé en ce que l'effluent traité comprend une phase solide et en ce qu'il comprend une étape consistant à recycler au moins une partie de la phase solide présente dans ledit réacteur d'oxydation.

16. Procédé selon l'une des revendications 1 à 15 caractérisé en ce qu'il comprend une étape consistant à ajuster préalablement le pH desdits effluents à une valeur allant de 7 à 12.

17. Procédé selon l'une des revendications 1 à 16 caractérisé en ce qu'il consiste à chauffer la zone du réacteur au niveau de laquelle ledit catalyseur hétérogène est disposé à une temperature supérieure à celle de l'effluent liquide.

18. Procédé selon l'une des revendications 2 à 17 caractérisé en ce qu'il comprend une étape consistant à chauffer ledit catalyseur hétérogène à une température supérieure à la température des effluents dans le réacteur.

19. Réacteur pour l'oxydation en phase aqueuse d'un effluent liquide par un agent oxydant spécialement conçu pour la mise en oeuvre du procédé selon les revendications 1 à 18 comprenant des moyens de maintien (4) d'un catalyseur hétérogène au-dessus de la surface dudit effluent liquide (10), caractérisé en ce qu'il comprend des moyens de chauffage desdits moyens de maintien (4).

20. Réacteur selon la revendication 19 caractérisé en ce qu'il inclut des moyens de réglage (11) de la position desdits moyens de maintien.

21. Réacteur selon la revendication 19 ou 20 caractérisé en ce que lesdits moyens de chauffage sont constitués par un collier chauffant (12) positionné à l'extérieur du réacteur.

## Claims

1. Method for aqueous phase oxidation of effluents, consisting in subjecting the said effluents to oxidation conducted inside a reactor in which a gaseous phase is provided above the liquid phase consisting of the effluents, in the presence of at least one heterogeneous catalyst arranged inside the said reactor and of at least one oxidising agent, at a temperature of between 20 °C and 350 °C, under a total pressure of between 1 and 160 bar, so as to mineralise some of the organic matter and ammonia nitrogen and total nitrogen contained in the said effluents, the said oxidation being
characterised in that the said catalyst is placed above the interface between the said gaseous phase and the said liquid phase.

2. Method according to Claim 1, characterised in that it is carried out at a temperature of between 200 °C and 350 °C, under a total pressure of between 20 and 160 bar.

3. Method according to Claim 1 or 2, characterised in that the said heterogeneous catalyst is a metal belonging to the group comprising vanadium, niobium, chromium, molybdenum, tungsten, manganese, iron, cobalt, nickel, copper, cerium, platinum, rhodium, ruthenium, palladium and iridium and the mixtures and compounds of one or more of these.

4. Method according to one of Claims 1 to 3, characterised in that the said catalyst is placed on a mineral support.

5. Method according to Claim 4, characterised in that the said mineral support is chosen from the group comprising alumina, silica, zeolites, titanium dioxide and zirconia.

6. Method according to one of Claims 1 to 3, characterised in that the said catalyst is present in the form of a metal honeycomb.

7. Method according to one of Claims 1 to 6, characterised in that the oxidising agent used for the said oxidation is chosen from air, oxygen-enriched air, oxygen, ozone, hydrogen peroxide, peracids, gaseous chlorine, chlorine dioxide, sodium hypochlorite and potassium permanganate.

8. Method according to one of Claims 1 to 7, characterised in that the oxidation is carried out in the presence of a gas flow in the reactor, consisting of at least one gas chosen from air, oxygen-enriched air, oxygen, ozone, water vapour or nitrogen.

9. Method according to one of Claims 1 to 8, characterised in that the said aqueous phase oxidation is also carried out in the presence of a homogeneous catalyst intended to improve the efficiency in lowering the COD.

10. Method according to Claim 9, characterised in that the said homogeneous catalyst is a metal belonging to the group comprising manganese, iron, cobalt, nickel, copper, zinc and the mixtures and compounds of one or more of these.

11. Method according to Claim 10, characterised in that the said catalyst is a soluble compound of copper or of zinc or a mixture thereof.

12. Method according to Claim 11, characterised in that the said soluble copper compound is copper sulphate.

13. Method according to one of Claims 10 to 12, characterised in that the mass ratio of metal catalyst/chemical oxygen demand (COD) of the effluent before treatment is between 5.10⁻⁴ and 3.10⁻¹.

14. Method according to one of Claims 1 to 13, characterised in that it comprises a step consisting in recycling at least part of the said gaseous phase present in the said oxidation reactor, so as to ensure an adequate contact time in said reactor to obtain substantial removal of NH₃, CO and volatile organic compounds by means of the said heterogeneous catalyst placed in the said reactor.

15. Method according to one of Claims 1 to 14, characterised in that the effluent treated contains a solid phase and in that said method comprises a step consisting in recycling at least part of the solid phase present in the said oxidation reactor.

16. Method according to one of Claims 1 to 15, characterised in that it comprises a step consisting in prior adjustment of the pH of the said effluents to a value ranging from 7 to 12.

17. Method according to one of Claims 1 to 16, characterised in that it consists in heating that zone of the reactor at the level of which the said heretogeneous catalyst is arranged to a temperature higher than that of the liquid effluent.

18. Method according to one of Claims 2 to 17, characterised in that it comprises a step consisting in heating the said heterogeneous catalyst to a temperature higher than the temperature of the effluents in the reactor.

19. Reactor for aqueous phase oxidation of a liquid effluent by an oxidising agent specially designed for implementation of the method according to Claims 1 to 18, comprising means for holding (4) a heterogeneous catalyst above the surface of the said liquid effluent (10), characterised in that it comprises means for heating the said holding means (4).

20. Reactor according to Claim 19, characterised in that it includes means for adjusting (11) the position of the said holding means.

21. Reactor according to Claim 19 or 20, characterised in that the said heating means comprise a heating collar (12) located on the outside of the reactor.

## Patentansprüche

1. Oxydationsverfahren von Abwässern in der wäßrigen Phase, welches darin besteht, daß die Abwässer einer Oxydation unterzogen werden, die im Inneren eines Reaktors stattfindet in welchem oberhalb der durch das Abwasser gebildeten flüssigen Phase eine Gasphase zustande gebracht wird, in Gegenwart von mindestens einem heterogenen Katalysator, der im Inneren des Reaktors angeordnet ist und von mindestens einem oxydierenden Stoff, bei einer Temperatur zwischen 20°C und 350°C unter einem Gesamtdruck zwischen 1 und 160 bar, um einen Teil der im Abwasser enthaltenen organischen Stoffe und des Ammoniakstickstoffes sowie des Gesamtstickstoffes zu mineralisieren,
wobei diese Oxydation dadurch gekennzeichnet ist, daß der Katalysator oberhalb der Schnittstelle zwischen der Gasphase und der flüssigen Phase angeordnet ist.

2. Verfahren gemäß Anspruch 1,
dadurch gekennzeichnet, daß es bei einer Temperatur zwischen 200°C und 350°C stattfindet, unter einem Gesamtdruck von 20 bis 160 bar.

3. Verfahren gemäß Anspruch 1 oder 2,
dadurch gekennzeichnet, daß der heterogene Katalysator ein Metall aus der Gruppe ist, die Vanadium, Niob, Chrom, Molybdän, Wolfram, Mangan, Eisen, Kobalt, Nickel, Kupfer, Cer, Platin, Rhodium, Ruthenium, Palladium und Iridium sowie die Gemische und Zusammensetzungen eines oder mehrerer dieser Metalle umfaßt.

4. Verfahren gemäß einem der Ansprüche 1 bis 3,
dadurch gekennzeichnet, daß der Katalysator auf einem mineralischen Träger angeordnet ist.

5. Verfahren gemäß Anspruch 4,
dadurch gekennzeichnet, daß der mineralische Träger aus der Gruppe gewählt wird, die Aluminiumoxid, Kieselerde, Zeolite, Titandioxyd und Zirkon umfaßt.

6. Verfahren gemäß einem der Ansprüche 1 bis 3,
dadurch gekennzeichnet, daß der Katalysator in Form einer metallischen Bienenwabe vorliegt.

7. Verfahren gemäß einem der Ansprüche 1 bis 6,
dadurch gekennzeichnet, daß der für die Oxydation genutzte oxydierende Stoff unter Luft, mit Sauerstoff angereicherter Luft, Sauerstoff, Ozon, Wasserstoffsuperoxyd, den Persäuren, gasförmigem Chlor, Chlordioxyd, Natriumhypochlorit und Kaliumpermanganat gewählt wird.

8. Verfahren gemäß einem der Ansprüche 1 bis 7,
dadurch gekennzeichnet, daß die Oxydierung im Reaktor in Gegenwart eines Gasflusses erfolgt, der aus mindestens einem Gas besteht, das unter Luft, mit Sauerstoff angereicherter Luft, Sauerstoff, Ozon, Wasserdampf oder Stickstoff gewählt wird.

9. Verfahren gemäß einem der Ansprüche 1 bis 8,
dadurch gekennzeichnet, daß die Oxydation in der wäßrigen Phase ebenfalls in Gegenwart eines homogenen Katalysators stattfindet, der die Herabsetzungseffizienz des CSB erhöht.

10. Verfahren gemäß Anspruch 9,
dadurch gekennzeichnet, daß der homogene Katalysator ein Metall aus der Gruppe ist, die Mangan, Eisen, Kobalt, Nickel, Kupfer, Zink sowie die Gemische und Zusammensetzungen eines oder mehrerer dieser Metalle umfaßt.

11. Verfahren gemäß Anspruch 10,
dadurch gekennzeichnet, daß der Katalysator eine lösliche Zusammensetzung von Kupfer oder Zink oder von einem Gemisch dieser zwei Metalle ist.

12. Verfahren gemäß Anspruch 11,
dadurch gekennzeichnet, daß es sich bei der löslichen Kupferzusammensetzung um Kupfersulfat handelt.

13. Verfahren gemäß einem der Ansprüche 10 bis 12,
dadurch gekennzeichnet, daß das Massenverhältnis Metallkatalysator/chemischer Sauerstoffbedarf (CSB) des Abwassers vor der Behandlung zwischen 5·10⁻⁴ und 3·10⁻¹ liegt.

14. Verfahren gemäß einem der Ansprüche 1 bis 13,
dadurch gekennzeichnet, daß es einen Schritt umfaßt, der im Recyklieren von mindestens einem Teil der im Oxydationsreaktor vorhandenen Gasphase besteht, um eine ausreichende Berührungszeit zum Eliminieren eines bedeutenden Teilesvon NH₃, von CO und von flüchtigen organischen Bestandteilen mit Hilfe des im Reaktor eingebrachten heterogenen Katalysators sicherzustellen.

15. Verfahren gemäß einem der Ansprüche 1 bis 14,
dadurch gekennzeichnet, daß das behandelte Abwasser eine feste Phase umfaßt und,
daß es einen Schrift umfaßt, welcher im Recyklieren von mindestens einem Teil der im Oxydationsreaktor vorhandenen festen Phase besteht.

16. Verfahren gemäß einem der Ansprüche 1 bis 15,
dadurch gekennzeichnet, daß es einen Schritt umfaßt, der darin besteht, den pH-Wert des Abwassers im voraus zwischen 7 und 12 einzustellen.

17. Verfahren gemäß einem der Ansprüche 1 bis 16,
dadurch gekennzeichnet, daß es darin besteht, den Bereich des Reaktors, in dem der heterogene Katalysator angebracht ist, auf eine höhere Temperatur als die des flüssigen Abwassers zu heizen.

18. Verfahren gemäß einem der Ansprüche 2 bis 17,
dadurch gekennzeichnet, daß es einen Schritt umfaßt, der darin besteht, den heterogenen Katalysator auf eine Temperatur zu heizen, die höher ist, als die des im Reaktor befindlichen Abwassers.

19. Reaktor zum Oxydieren von Abwässern in der flüssigen Phase mittels eines oxydierenden Stoffes, der besonders für die Anwendung des Verfahrens gemäß der Ansprüche 1 bis 18 konzipiert ist, wobei der Stoff Erhaltungsmittel (4) für einen heterogenen Katalysator oberhalb der Oberfläche des flüssigen Abwassers (10) enthält,
dadurch gekennzeichnet, daß er über Mittel zum Heizen der Erhaltungsmittel (4) verfügt.

20. Reaktor gemäß Anspruch 19,
dadurch gekennzeichnet, daß er über Mittel zum Regeln (11) der Position der Erhaltungsmittel verfügt.

21. Reaktor gemäß einem der Ansprüche 19 oder 20,
dadurch gekennzeichnet, daß die Heizungsmittel aus einem Heizgürtel (12) bestehen, der außerhalb des Reaktors angebracht ist.
